# EUROPEAN PATENT SPECIFICATION

(11) **EP 4 358 250 B1**
(45) Date of publication and mention of the grant of the patent: **29.01.2025**
(21) Application number: 23201235.1
(22) Date of filing: 02.10.2023
(51) Int. Cl.: H01M 50/209, H01M 50/264

(54) **BATTERY MODULE**
BATTERIEMODUL
MODULE DE BATTERIE

(30) Priority: 20.10.2022 JP 2022168088
(43) Date of publication of application: 24.04.2024
(73) Proprietor: Prime Planet Energy & Solutions, Inc., Chuo-ku Tokyo 103-0022 (JP)
(72) Inventor: TSUDA, Yoshihiro, Tokyo, 103-0022 (JP); ABE, Kosyo, Tokyo, 103-0022 (JP); TERANAKA, Tomochika, Tokyo, 103-0022 (JP)
(74) Representative: Kuhnen & Wacker Patent- und Rechtsanwaltsbüro PartG mbB

(56) References cited:
- EP-A1- 4 050 713
- EP-A2- 2 362 463
- WO-A1-2021/199493
- WO-A1-2022/213728
- US-A1- 2012 141 855

## Description

### BACKGROUND OF THE INVENTION

### Field of the Invention

The present technology relates to a battery module.

### Description of the Background Art

Conventionally, an end plate is formed using a plate-shaped member, and a flange portion is provided at an end portion of the plate-shaped member.

Examples of the background art include Japanese Patent Laying-Open No. 2015-099648 and Japanese Patent Laying-Open No. 2015-069811.

Further, patent document WO 2021/199493 A1 discloses a power supply device, comprising: a battery laminate in which a plurality of square battery cells are laminated; a plan view rectangular end plate having a pressing surface which covers an end surface of the battery laminate; and a fastening member which fastens the battery laminate. The end plate forms, on the pressing surface, flat pressing regions respectively formed on the end edge sides in the up-down direction, and a bead region which is formed on the middle side in the up-down direction and curves to a shape projecting to the back surface side of the pressing surface. The foregoing allows the pressing regions for pressing the battery laminate to remain on the end plate, while making it possible to improve strength by changing the shape forming the bead region in the middle.

Patent document EP 2 362 463 A2 discloses a power source apparatus which is provided with battery blocks made up of a plurality of battery cells connected in battery stacks, and an outer case that holds the battery blocks. A block circuit board to control the battery cells that make up each battery stack and electrical components connected to the block circuit board or the battery stack are disposed in the end-planes of each battery stack.

Patent document US 2012/141855 A1 discloses a battery pack device including a plurality of battery cells, a bind bar, and a regulation member. The plurality of battery cells has a rectangular box exterior shape. The bind bar couples the plurality of battery cells to each other with the battery cells being arranged side by side. When the battery pack is secured onto a horizontal surface, the regulation member regulates upward deviation of at least one of the battery cells, which is located in a central part of the battery pack in the side-by-side arrangement direction of the battery cells.

Patent document WO 2022/213728 A1 relates to the technical field of batteries, and in particular, to a battery and an electrical device. The battery comprises: a plurality of battery cells arranged in a first direction; end plates disposed at end portions of the plurality of battery cells in the first direction; and an insulating component connected to the end plates and disposed on the top surfaces of the end plates in a second direction, wherein the second direction is perpendicular to the first direction; the maximum length of the insulating member in a third direction is A; the maximum length of the end plates in the third direction is B; A ≥ 0.9 B; the third direction is perpendicular to the first direction and the second direction.

In addition, patent document EP 4 050 713 A1 discloses that to provide a power supply device including a battery stack in which battery cells are stacked, in order to prevent entering of water due to a capillary phenomenon and unintended conduction from occurring, the power supply device including, in a battery stack, a spacer interposed between adjacent battery cells, end plates that press end surfaces of the battery stack, a plurality of fastening members each formed into a plate shape extending in a stacking direction of the plurality of battery cells, the fastening members being disposed on opposite side surfaces of the battery stack and fastening end plates to each other, an output terminal that connects the plurality of battery cells in series or in parallel and outputs electric power, and a lower plate that is made of metal and covers a lower surface of the battery stack, wherein the output terminal is disposed near an upper surface side of the battery stack, and one or more wide regions expanded to be intervals at which a capillary phenomenon does not occur are formed in a path of a gap from the lower plate or the plurality of fastening members to the output terminal.

### SUMMARY OF THE INVENTION

Even when the shape of the plate-shaped member is changed, it is required to avoid strength of the end plate from being decreased due to stress concentration. In another aspect, it is required to secure a region for a flat surface portion of the plate-shaped member and promote fastening thereof to a restraint member (binding bar) while satisfying a demand for size reduction of a battery module.

It is an object of the present technology to provide a battery module to maintain strength and attain a reduced size.

The above object is solved by the subject-matter of claim 1. Further advantageous configurations of the invention can be drawn from the dependent claims.

A first explanatory aspect of the present disclosure provides a battery module comprising: a plurality of battery cells arranged side by side in a first direction, each of the plurality of battery cells having a prismatic shape; an end plate provided to be arranged side by side with the plurality of battery cells in the first direction; and a restraint member that restrains the plurality of battery cells and the end plate along the first direction, the restraint member being provided to be arranged side by side with the plurality of battery cells and the end plate in a second direction orthogonal to the first direction, wherein the end plate includes a plate-shaped member, the plate-shaped member includes a flat surface portion, a flange portion, and a transition portion, the flange portion being provided at an end portion of the plate-shaped member in a third direction orthogonal to the first direction and the second direction, the flange portion protruding from the flat surface portion in the first direction, the transition portion continuously transitioning from the flat surface portion to the flange portion, and the flat surface portion, the transition portion, and the flange portion are provided to be arranged side by side in the second direction.

A second explanatory aspect of the present disclosure relates to the first explanatory aspect, wherein the end plate includes a fastening portion that is provided in the flat surface portion adjacent to the transition portion and that is fastened to the restraint member.

A third explanatory aspect of the present disclosure relates to the second explanatory aspect, wherein the fastening portion is provided to be located at each of both end portions of the end plate in the second direction.

A fourth explanatory aspect of the present disclosure relates to any one of the first to third explanatory aspects, further comprising a case that accommodates the plurality of battery cells, that supports the plurality of battery cells in at least the first direction, and that forms a unit including the plurality of battery cells.

A fifth explanatory aspect of the present disclosure relates to the fourth explanatory aspect, wherein the plate-shaped member has a protrusion and a recess each extending in the second direction and arranged side by side in the third direction, and the protrusion is in abutment with the case in the first direction.

A sixth explanatory aspect of the present disclosure relates to the fourth or fifth explanatory aspect, wherein the unit includes two or more battery cells, and each of the two or more battery cells has an output density of 8000 W/L or more.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing a battery module.
Fig. 2 is an exploded assembly diagram showing the battery module.
Fig. 3 is a perspective view showing a battery cell unit included in the battery module.
Fig. 4 is a perspective view showing a battery cell included in the battery cell unit.
Fig. 5 is a side view showing surroundings around abutment portions between an end plate and the battery cell unit.
Fig. 6 is a first perspective view showing the end plate.
Fig. 7 is a second perspective view showing the end plate.
Fig. 8 is a perspective view showing a plate-shaped member included in the end plate.
Fig. 9 is a side view showing the end plate.
Fig. 10 is a front view showing the end plate.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other batteries such as a nickel-metal hydride battery and a sodium ion battery. In the present specification, the term "electrode" may collectively represent a positive electrode and a negative electrode.

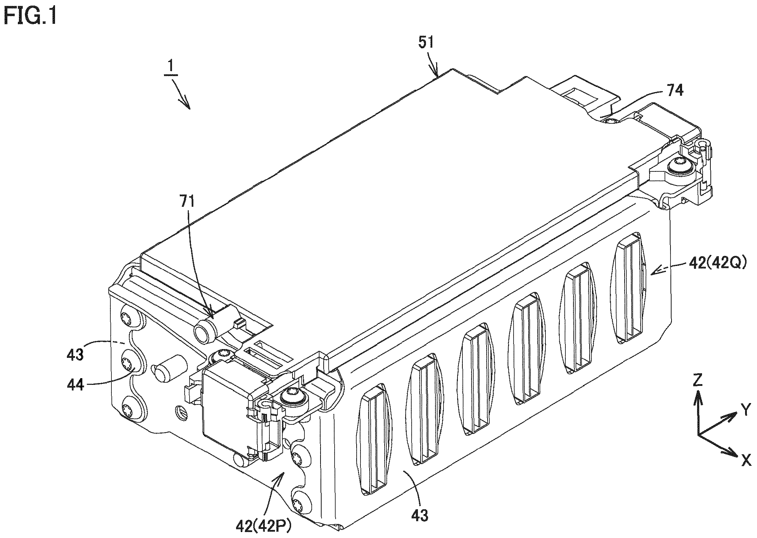

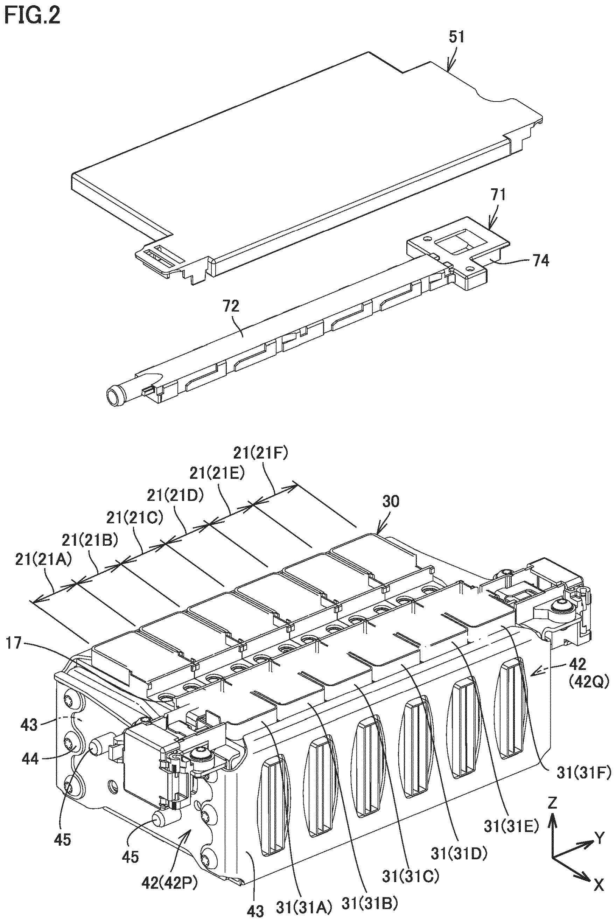

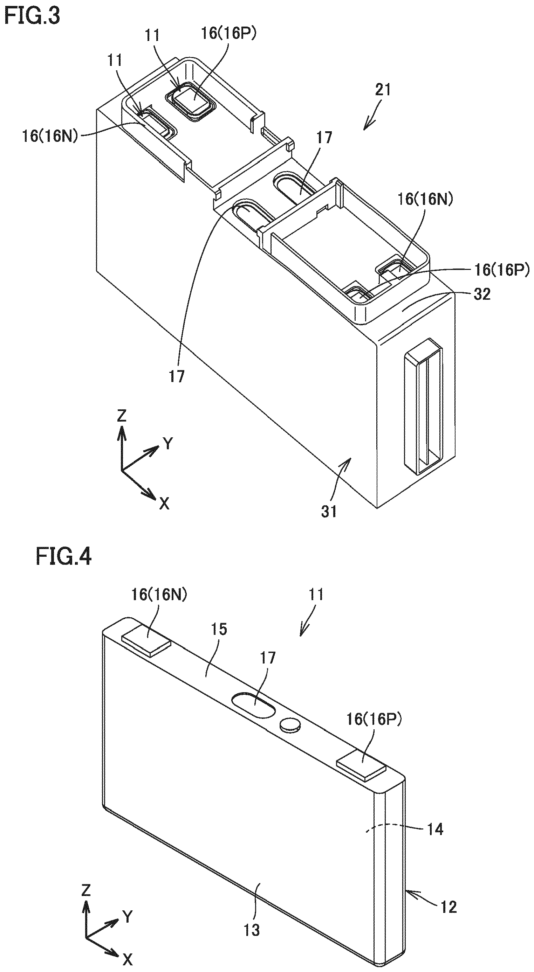

Fig. 1 is a perspective view showing a battery module according to an embodiment of the present invention. Fig. 2 is an exploded assembly diagram showing the battery module in Fig. 1. Fig. 3 is a perspective view showing a battery cell unit included in the battery module in Fig. 1. Fig. 4 is a perspective view showing a battery cell included in the battery cell unit in Fig. 1.

Referring to Figs. 1 to 4, a battery module 1 is used as a power supply for driving a vehicle such as a hybrid electric vehicle (HEV), a plug-in hybrid electric vehicle (PHEV), or a battery electric vehicle (BEV).

In the present specification, for convenience of description of the structure of battery module 1, the "Y axis" represents an axis extending in parallel with a stacking direction of a plurality of below-described battery cells 11, the "X axis" represents an axis extending in a direction orthogonal to the Y axis, and the "Z axis" represents an axis extending in a direction orthogonal to the Y axis and the X axis. An obliquely rightward upward direction in the plane of sheet of Fig. 1 is "+Y axis direction", and an obliquely leftward downward direction in the plane of sheet of Fig. 1 is "-Y axis direction". An obliquely rightward downward direction in the plane of sheet of Fig. 1 is "+X axis direction" and an obliquely leftward upward direction in the plane of sheet of Fig. 1 is "-X axis direction". An upward direction in the plane of sheet of Fig. 1 is "+Z axis direction" and a downward direction in the plane of sheet of Fig. 1 is "-Z axis direction". Typically, battery module 1 is mounted on a vehicle in such a posture that the +Z axis direction corresponds to the upward direction and the -Z axis direction corresponds to the downward direction.

First, an overall structure of battery module 1 will be described. As shown in Fig. 2, battery module 1 has a plurality of battery cell units 21 (21A, 21B, 21C, 21D, 21E, 21F).

The plurality of battery cell units 21 are arranged side by side in the Y axis direction. Battery cell unit 21A, battery cell unit 21B, battery cell unit 21C, battery cell unit 21D, battery cell unit 21E, and battery cell unit 21F are arranged side by side in this order from the negative side to the positive side in the Y axis direction. It should be noted that the number of battery cell units 21 included in battery module 1 is not particularly limited as long as two or more battery cell units 21 are included.

As shown in Figs. 3 and 4, each of battery cell units 21, i.e., each of battery cell units 21A to 21F includes a plurality of battery cells 11 and a case body 31.

In each battery cell unit 21, two battery cells 11 are arranged side by side continuously in the Y axis direction. It should be noted that the number of battery cells 11 included in each battery cell unit 21 is not particularly limited as long as a plurality of battery cells 11 are included.

Each of battery cells 11 is a lithium ion battery. As an example, battery cell 11 can have an output density of 8000 W/L or more. Battery cell 11 has a prismatic shape. More specifically, battery cell 11 has a thin plate shape in the form of a rectangular parallelepiped. The plurality of battery cells 11 are stacked such that the Y axis direction corresponds to the thickness direction of each battery cell 11.

Each of battery cells 11 has an exterior package 12. Exterior package 12 is constituted of a housing having a rectangular parallelepiped shape, and forms the external appearance of battery cell 11. An electrode assembly and an electrolyte solution are accommodated in exterior package 12.

Exterior package 12 has a cell side surface 13, a cell side surface 14, and a cell top surface 15. Each of cell side surface 13 and cell side surface 14 is constituted of a flat surface orthogonal to the Y axis direction. Cell side surface 13 and cell side surface 14 are oriented oppositely in the Y axis direction. Each of cell side surface 13 and cell side surface 14 has the largest area among the areas of the plurality of side surfaces of exterior package 12. Cell top surface 15 is constituted of a flat surface orthogonal to the Z axis direction. Cell top surface 15 is oriented in the +Z axis direction.

Battery cell 11 further has a gas-discharge valve 17. Gas-discharge valve 17 is provided in cell top surface 15. Gas-discharge valve 17 is provided at the center portion of cell top surface 15 in the X axis direction. When internal pressure of exterior package 12 becomes more than or equal to a predetermined value due to gas generated inside exterior package 12, gas-discharge valve 17 discharges the gas to the outside of exterior package 12. The gas from gas-discharge valve 17 flows through a below-described duct 71 and is discharged to the outside of battery module 1.

Battery cell 11 further has electrode terminals 16 including a pair of a positive electrode terminal 16P and a negative electrode terminal 16N. Electrode terminals 16 are provided on cell top surface 15. Positive electrode terminal 16P and negative electrode terminal 16N are provided on both sides with gas-discharge valve 17 being interposed therebetween in the X axis direction.

Case body 31 has a rectangular parallelepiped appearance. Case body 31 is composed of a resin. In each battery cell unit 21, case body 31 accommodates a plurality of battery cells 11. Case body 31 has a case top portion 32. Case top portion 32 has a wall shape having a thickness direction corresponding to the Z axis direction with case top portion 32 being disposed in parallel with the X-Y axes plane.

As shown in Figs. 2 and 3, the plurality of battery cells 11 are stacked in the Y axis direction (first direction) across battery cell units 21A to 21F arranged side by side in the Y axis direction. The plurality of battery cells 11 are stacked such that cell side surfaces 13 of battery cells 11 adjacent to each other in the Y axis direction face each other and cell side surfaces 14 of battery cells 11 adjacent to each other in the Y axis direction face each other. Thus, positive electrode terminals 16P and negative electrode terminals 16N are alternately arranged in the Y axis direction in which the plurality of battery cells 11 are stacked. Positive electrode terminal 16P and negative electrode terminal 16N adjacent to each other in the Y axis direction are connected to each other by a bus bar (not shown). Thus, the plurality of battery cells 11 are electrically connected together in series.

As shown in Figs. 1 and 2, battery module 1 further has a pair of end plates 42 (42P, 42Q) and a pair of binding bars 43 (restraint members). The pair of binding bars 43 and the pair of end plates 42 collectively hold the plurality of battery cell units 21 (the plurality of battery cells 11) arranged side by side in the Y axis direction.

The pair of end plates 42 are disposed at both ends beside the plurality of battery cells 11 (the plurality of battery cell units 21) in the Y axis direction. End plate 42P faces battery cell unit 21A in the Y axis direction, and end plate 42Q faces battery cell unit 21F in the Y axis direction.

The pair of binding bars 43 are disposed at both ends of the stack of battery cells 11 in the X axis direction (second direction). That is, the pair of binding bars 43 are provided to be arranged side by side with the plurality of battery cell units 21 and end plates 42 in the X axis direction. Each of binding bars 43 extends in the Y axis direction. An end portion of binding bar 43 in the -Y axis direction is connected to end plate 42P by a bolt 44. An end portion of binding bar 43 in the +Y axis direction is connected to end plate 42Q by a bolt 44. The pair of binding bars 43 and the pair of end plates 42 apply a restraint force in the Y axis direction onto the plurality of battery cells 11 (the plurality of battery cell units 21). It should be noted that a retainer may be further provided which extends in the X axis direction with the retainer intersecting a below-described duct 71 and which is connected to the pair of binding bars 43 at both end portions thereof.

Stud bolts 45 are attached to end plates 42. Battery module 1 is fixed to a supporting mechanism (such as a pack case) via stud bolts 45.

Battery module 1 further has duct 71 and a cover body 51.

Duct 71 is composed of a resin such as polybutylene terephthalate resin (PBT resin). Duct 71 extends in the Y axis direction with duct 71 facing the plurality of battery cells 11 (the plurality of battery cell units 21) in the Z axis direction (third direction). Duct 71 is an elongated body extending in the Y axis direction. Duct 71 forms a path through which gas discharged from each of the plurality of battery cells 11 flows. Duct 71 is attached to an attachment-target member 30. Attachment-target member 30 is a member held by battery cells 11, and, in the present embodiment, is constituted of the plurality of case bodies 31 arranged side by side in the Y axis direction.

Cover body 51 is composed of a resin. Cover body 51 is provided to cover the plurality of battery cells 11 in the Z axis direction. Cover body 51 is provided to face case top portions 32 of case bodies 31 in the Z axis direction. Cover body 51 is provided to further cover duct 71.

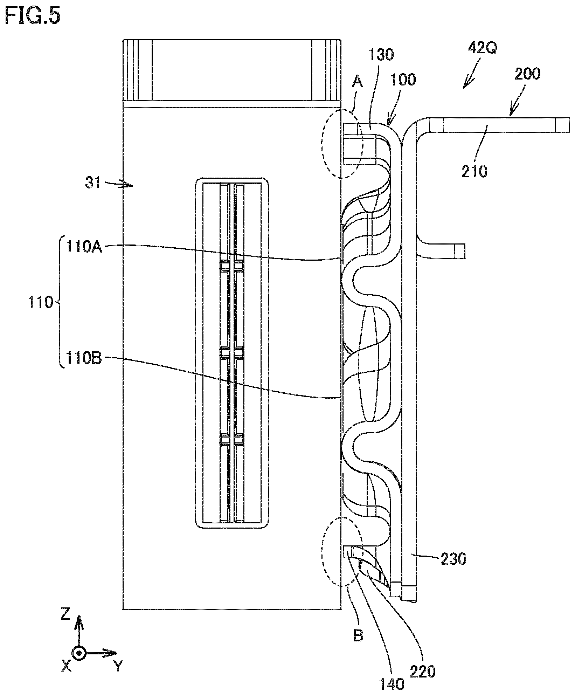

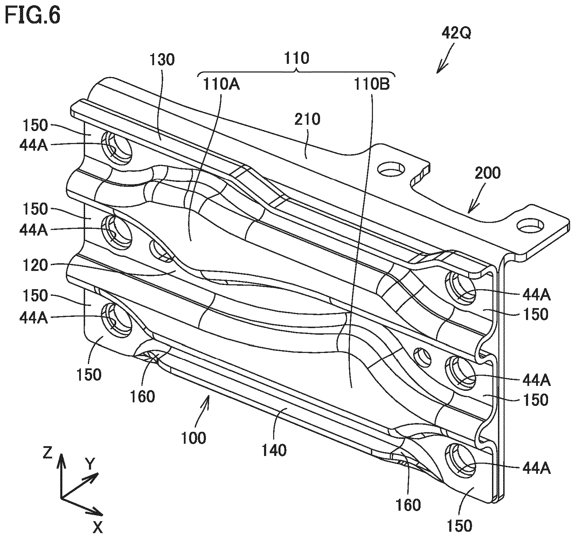

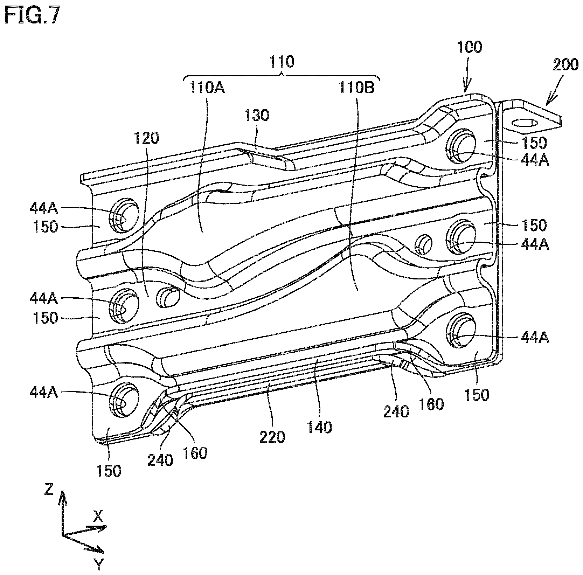

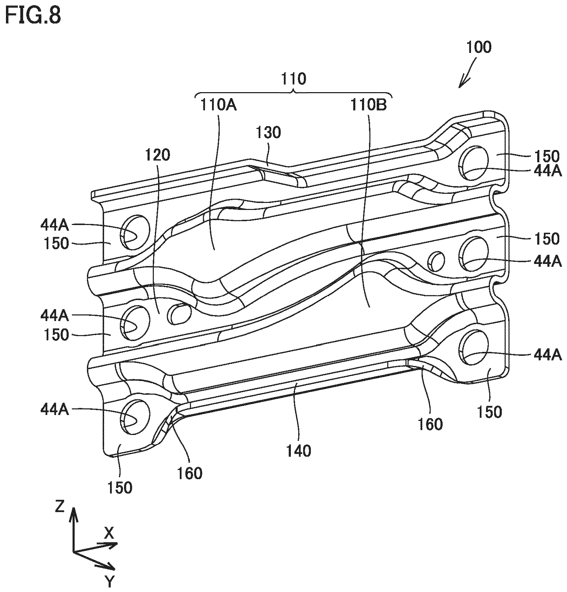

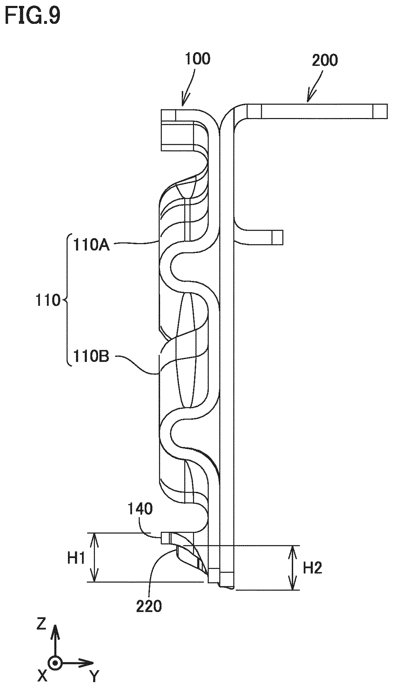

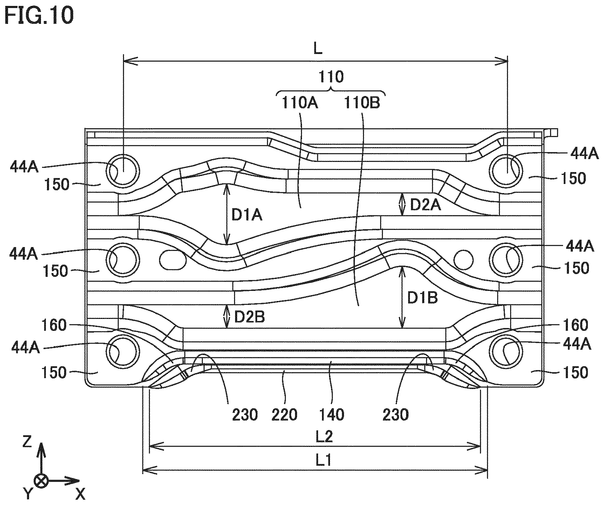

Fig. 5 is a side view showing surroundings around abutment portions between end plate 42Q and case body 31 of battery cell unit 21F. Each of Figs. 6 and 7 is a perspective view showing end plate 42Q. Fig. 8 is a perspective view showing a plate-shaped member 100 included in end plate 42Q. Fig. 9 is a side view showing end plate 42Q. Fig. 10 is a front view showing end plate 42Q.

It should be noted that one end plate 42Q is shown in Figs. 5 to 9; however, the other end plate 42P has substantially the same structure as that of end plate 42Q.

Referring to Figs. 5 to 9, end plate 42Q is constituted of two plate-shaped members 100, 200. Plate-shaped member 100 has a wave shape including protrusions 110 and recesses 120. Protrusions 110 and recesses 120 are formed by a bending process to provide a continuous, curved surface with no angular portion. As shown in Fig. 5, protrusions 110 constitute abutment portions 110A, 110B that are each in abutment with case body 31.

Plate-shaped member 100 has flange portions 130, 140 each protruding to the case body 31 side along the Y axis direction. A clearance is formed between each of the tips of flange portions 130, 140 in the Y axis direction and case body 31 (A and B in Fig. 5).

Plate-shaped member 200 has: a flange portion 210 protruding opposite to case body 31 along the Y axis direction; and a flange portion 220 protruding to the case body 31 side. A clearance is formed between the tip of flange portion 220 in the Y axis direction and case body 31 (B in Fig. 5).

In plate-shaped member 100, the plurality of protrusions 110 and the plurality of recesses 120 are alternately formed to be arranged side by side in the Z axis direction. Each of protrusions 110 and recesses 120 is formed to extend in the X axis direction. In each of the plurality of recesses 120 (three in the example of Figs. 5 to 9), a flat surface portion 150 is formed. Fastening holes 44A (fastening portions) extending through plate-shaped members 100, 200 are formed at flat surface portions 150 located at the both end portions of end plate 42Q in the X axis direction. Bolts 44 for fastening end plate 42Q to binding bar 43 are inserted into fastening holes 44A.

Respective flange portions 140, 220 of plate-shaped members 100, 200 are provided only at the center portion of end plate 42Q in the X axis direction, and are not provided at the both end portions of end plate 42Q in the X axis direction. Hence, at the both end portions of end plate 42Q in the X axis direction, flat surface portions 150, 230 extend to the lower end portions (tips in the -Z axis direction) of plate-shaped members 100, 200.

Between flange portion 140 and flat surface portion 150 each located at the lower end portion of plate-shaped member 100, a transition portion 160 is provided to continuously transition from flat surface portion 150 to flange portion 140. Transition portion 160 is adjacent to flat surface portion 150 located at the lower end portion of plate-shaped member 100. Transition portion 160 is formed by performing a twisting process (twist-bending process) onto plate-shaped member 100. Therefore, the transition is made to provide plate-shaped member 100 with a curved surface that has no angular portion and that is continuous from each of flat surface portions 150 on the both end sides of end plate 42Q in the X axis direction to flange portion 140 on the center side of end plate 42Q in the X axis direction. Flat surface portion 150, transition portion 160, and flange portion 140 each located at the lower end portion of plate-shaped member 100 are arranged side by side in the X axis direction (second direction).

Similarly, between flange portion 220 and flat surface portion 230 each located at the lower end portion of plate-shaped member 200, a transition portion 240 is provided to continuously transition from flat surface portion 230 to flange portion 220. Transition portion 240 is adjacent to flat surface portion 230 located at the lower end portion of plate-shaped member 200. Transition portion 240 is formed by performing a twisting process (twist-bending process) onto plate-shaped member 200. Therefore, the transition is made to provide plate-shaped member 200 with a curved surface that has no angular portion and that is continuous from each of flat surface portions 230 on the both end sides of end plate 42Q in the X axis direction to flange portion 220 on the center side of end plate 42Q in the X axis direction. Flat surface portion 230, transition portion 240, and flange portion 220 each located at the lower end portion of plate-shaped member 200 are arranged side by side in the X axis direction (second direction).

Flange portion 140 of plate-shaped member 100 and flange portion 220 of plate-shaped member 200 are formed to be arranged side by side in the Z axis direction. Flange portion 140 is located on the +Z axis direction side with respect to flange portion 220.

As shown in Fig. 10, each of a total length (L1) of flange portion 140 and transition portions 160 in the X axis direction and a total length (L2) of flange portion 220 and transition portions 240 in the X axis direction is smaller than a pitch (L) between fastening holes 44A in the X axis direction (L > L1, L2). Therefore, at the both end portions in the X axis direction, it is possible to secure regions for flat surface portions 150, 230 to provide fastening holes 44A on the lower end side (-Z axis direction side).

As exemplary sizes shown in Figs. 9 and 10, L is about 100 mm, L1 is about 90 mm, L2 is about 80 mm, and each of H1 and H2 is about 5 to 6 mm.

Each of the widths of abutment portions 110A, 110B extending in the X axis direction is changed along the X axis direction, and abutment portions 110A, 110B have portions wide in width (D1A, D1B) and portions narrow in width (D2A, D2B). As shown in Fig. 10, each of the widths of abutment portions 110A, 110B is continuously and smoothly changed (in the form of a curve) between each portion wide in width and each portion narrow in width.

Stud bolts 45 are attached to end plate 42Q (plate-shaped member 200) on sides opposite to the portions wide in width (D1A, D1B) shown in Fig. 10. This leads to improved supporting strength for battery module 1.

In battery module 1 according to the embodiment of the present technology, the strength of end plate 42Q can be improved by forming plate-shaped member 100 included in end plate 42Q into the wave shape including protrusions 110 and recesses 120.

Moreover, the strength of end plate 42Q can be further improved by providing flange portions 130, 140, 210, 220 protruding along the Y axis direction from the upper and lower end portions (the upper and lower end portions in the Z axis direction) of plate-shaped members 100, 200.

Since flat surface portions 150, 230 extend to the lower end portions of plate-shaped members 100, 200 without providing flange portions 140, 220 at the lower end portions in the both end portions of end plate 42Q in the X axis direction, the areas of flat surface portions 150, 230 can be secured while suppressing increased heights of plate-shaped members 100, 200 in the Z axis direction, with the result that the size reduction of end plate 42Q is avoided from being inhibited.

Thus, in battery module 1, flange portions 140, 220 (the center portion in the X axis direction) and flat surface portions 150, 230 (the both end portions in the X axis direction) are provided at the lower end portions of plate-shaped members 100, 200. This causes formation of respective boundary portions between flange portions 140, 220 and flat surface portions 150, 230. Since transition portions 160, 240 are provided at these boundary portions to continuously transition from flat surface portions 150, 230 to flange portions 140, 220, an angular portion that causes excessive stress concentration can be avoided from being formed in each of plate-shaped members 100, 200, with the result that flange portions 140, 220 can be connected to flat surface portions 150, 230 respectively without impairing the strength of end plate 42Q.

As a result, it is possible to attain the size reduction of battery module 1 (particularly, suppression of increased size in the Z axis direction) while maintaining the strength of end plate 42Q.

Further, in battery module 1, by forming battery cell units 21 that each accommodate the plurality of battery cells 11 in case body 31 with the plurality of battery cells 11 being arranged side by side in the Y axis direction and by forming battery module 1 by arranging the plurality of battery cell units 21 side by side in the Y axis direction, a manufacturing process can be simplified as compared with a case where battery module 1 is manufactured based on each of the plurality of battery cells 11 as one unit.

In battery module 1, by forming battery cell units 21 that each accommodate the plurality of battery cells 11 in case body 31, battery module 1 can be readily disassembled or replaced based on each battery cell unit 21 as a unit.

In battery module 1, by forming battery cell units 21 that each accommodate the plurality of battery cells 11 in case body 31, battery module 1 can be divided based on each battery cell unit 21 as one unit in order to lower the voltage to be handled when discarding battery module 1. Therefore, battery module 1 can be readily discarded.

In battery module 1, since two or more battery cells 11 are included in one unit and each of two or more battery cells 11 is set to have an output density of about 8000 W/L or more, a power supply device having a predetermined voltage or higher can be formed based on each unit.

## Claims

1. A battery module comprising:
a plurality of battery cells (11) arranged side by side in a first direction (Y), each of the plurality of battery cells (11) having a prismatic shape;
an end plate (42) provided to be arranged side by side with the plurality of battery cells (11) in the first direction (Y); and
a restraint member (43) that restrains the plurality of battery cells (11) and the end plate (42) along the first direction (Y), the restraint member (43) being provided to be arranged side by side with the plurality of battery cells (11) and the end plate (42) in a second direction (X) orthogonal to the first direction (Y), wherein
the end plate (42) includes a plate-shaped member (100, 200),
the plate-shaped member (100, 200) includes a flat surface portion (150, 230) extending orthogonally to the first direction (Y), a flange portion (140, 220), and a transition portion (160, 240), the flange portion (140, 220) being provided at an end portion of the plate-shaped member (100, 200) in a third direction (Z) orthogonal to the first direction (Y) and the second direction (X), the flange portion (140, 220) protruding from the flat surface portion (150, 230) in the first direction (Y), the transition portion (160, 240) continuously transitioning with a continuous curved surface that has no angular portion from the flat surface portion (150, 230) to the flange portion (140, 220),
the plate-shaped member (100, 200) has a wave shape including a protrusion (110) and a recess (120) each extending in the second direction (X), the flat surface portion (150, 230) is provided to be located at the recess (120),
the flange portion (140, 220) is not provided at both end portions of the end plate (42) in the second direction (X), the flat surface portion (150, 230) extends to a tip in the third direction (Z) of the plate-shaped member (100, 200), and
the flat surface portion (150, 230), the transition portion (160, 240), and the flange portion (140, 220) are provided to be arranged side by side in the second direction (X).

2. The battery module according to claim 1, wherein the end plate (42) includes a fastening portion (44A) that is provided in the flat surface portion (150, 230) adjacent to the transition portion (160, 240) and that is fastened to the restraint member (43).

3. The battery module according to claim 2, wherein the fastening portion (44A) is provided to be located at each of both end portions of the end plate (42) in the second direction.

4. The battery module according to any one of claims 1 to 3, further comprising a case (31) that accommodates the plurality of battery cells (11), that supports the plurality of battery cells (11) in at least the first direction, and that forms a unit (21) including the plurality of battery cells (11).

5. The battery module according to claim 4, wherein the plate-shaped member (100) has the protrusion (110) and the recess (120) each extending in the second direction and arranged side by side in the third direction, and the protrusion (110) is in abutment with the case in the first direction.

6. The battery module according to claim 4 or 5, wherein the unit (21) includes two or more battery cells (11), and each of the two or more battery cells (11) has an output density of 8000 W/L or more.

## Patentansprüche

1. Batteriemodul, aufweisend:
eine Mehrzahl an Batteriezellen (11), die nebeneinander in einer ersten Richtung (Y) angeordnet sind, wobei jede von der Mehrzahl an Batteriezellen (11) eine prismatische Gestalt aufweist;
eine Endplatte (42), die so angeordnet ist, dass sie sich neben der Mehrzahl an Batteriezellen (11) in der ersten Richtung (Y) befindet; und
ein Rückhalteelement (43), das die Mehrzahl an Batteriezellen (11) und die Endplatte (42) entlang der ersten Richtung (Y) zurückhält, wobei das Rückhalteelement (43) so angeordnet ist, dass es sich neben der Mehrzahl an Batteriezellen (11) und der Endplatte (42) in einer zweiten Richtung (X) befindet, die zu der ersten Richtung (Y) rechtwinklig ist, wobei
die Endplatte (42) ein plattenförmiges Element (100, 200) beinhaltet,
das plattenförmige Element (100, 200) einen flachen Oberflächenabschnitt (150, 230), der sich rechtwinklig zur ersten Richtung (Y) erstreckt, einen Flanschabschnitt (140, 220) und einen Übergangsabschnitt (160, 240) beinhaltet, wobei der Flanschabschnitt (140, 220) an einem Endabschnitt des plattenförmigen Elements (100, 200) in einer dritten Richtung (Z) bereitgestellt ist, die rechtwinklig zu der ersten Richtung (Y) und der zweiten Richtung (X) ist, wobei der Flanschabschnitt (140, 220) von dem flachen Oberflächenabschnitt (150, 230) in der ersten Richtung (Y) vorsteht, wobei der Übergangsabschnitt (160, 240) kontinuierlich mit einer kontinuierlichen, gekrümmten Oberfläche, die keinen Winkelabschnitt aufweist, von dem flachen Oberflächenabschnitt (150, 230) in den Flanschabschnitt (140, 220) übergeht,
das plattenförmige Element (100, 200) eine Wellengestalt aufweist, die einen Vorsprung (110) und eine Vertiefung (120) aufweist, die sich jeweils in der zweiten Richtung (X) erstrecken, wobei der flache Oberflächenabschnitt (150, 230) so bereitgestellt ist, dass sich dieser an der Vertiefung (120) befindet,
der Flanschabschnitt (140, 220) nicht an beiden Endabschnitten der Endplatte (42) in der zweiten Richtung (X) bereitgestellt ist, wobei sich der flache Oberflächenabschnitt (150, 230) zu einer Spitze in der dritten Richtung (Z) des plattenförmigen Elements (100, 200) erstreckt, und
der flache Oberflächenabschnitt (150, 230), der Übergangsabschnitt (160, 240) und der Flanschabschnitt (140, 220) so bereitgestellt sind, dass diese in der zweiten Richtung (X) nebeneinander angeordnet sind.

2. Batteriemodul nach Anspruch 1, wobei die Endplatte (42) einen Befestigungsabschnitt (44A) beinhaltet, der bei dem flachen Oberflächenabschnitt (150, 230) neben dem Übergangsabschnitt (160, 240) bereitgestellt und an dem Rückhalteelement (43) befestigt ist.

3. Batteriemodul nach Anspruch 2, wobei der Befestigungsabschnitt (44A) so bereitgestellt ist, dass sich dieser an jedem von beiden Endabschnitten der Endplatte (42) in der zweiten Richtung befindet.

4. Batteriemodul nach einem der Ansprüche 1 bis 3, ferner aufweisend ein Gehäuse (31), das die Mehrzahl an Batteriezellen (11) aufnimmt und die Mehrzahl an Batteriezellen (11) in zumindest der ersten Richtung trägt, und das eine Einheit (21) bildet, welche die Mehrzahl an Batteriezellen (11) beinhaltet.

5. Batteriemodul nach Anspruch 4, wobei das plattenförmige Element (100) den Vorsprung (110) und die Vertiefung (120) aufweist, die sich jeweils in der zweiten Richtung erstrecken und nebeneinander in der dritten Richtung angeordnet sind, und wobei der Vorsprung (110) in der ersten Richtung an das Gehäuse anstößt.

6. Batteriemodul nach Anspruch 4 oder 5, wobei die Einheit (21) zwei oder mehr Batteriezellen (11) beinhaltet, und wobei jede der zwei oder mehr Batteriezellen (11) eine Ausgangsdichte von 8000 W/L oder mehr aufweist.

## Revendications

1. Module de batterie comprenant :
une pluralité de cellules de batterie (11) disposées côte à côte dans une première direction (Y), chacune des cellules de batterie (11) ayant une forme prismatique ;
une plaque d'extrémité (42) prévue pour être disposée côte à côte avec la pluralité de cellules de batterie (11) dans la première direction (Y) ; et
un élément de retenue (43) qui retient la pluralité de cellules de batterie (11) et la plaque d'extrémité (42) le long de la première direction (Y), l'élément de retenue (43) étant prévu pour être disposé côte à côte avec la pluralité de cellules de batterie (11) et la plaque d'extrémité (42) dans une deuxième direction (X) orthogonale à la première direction (Y), dans lequel
la plaque d'extrémité (42) comprend un élément en forme de plaque (100, 200),
l'élément en forme de plaque (100, 200) comprend une partie de surface plate (150, 230) s'étendant orthogonalement à la première direction (Y), une partie de bride (140, 220) et une partie de transition (160, 240), la partie de bride (140, 220) étant fournie à une partie d'extrémité de l'élément en forme de plaque (100, 200) dans une troisième direction (Z) orthogonale à la première direction (Y) et à la deuxième direction (X), la partie bride (140, 220) faisant saillie à partir de la partie surface plane (150, 230) dans la première direction (Y), la partie transition (160, 240) se prolongeant continuellement par une surface courbe continue ne présentant aucune portion angulaire entre la partie surface plane (150, 230) et la partie bride (140, 220),
l'élément en forme de plaque (100, 200) a une forme de vague comprenant une protubérance (110) et un renfoncement (120) s'étendant chacun dans la deuxième direction (X), la partie de surface plate (150, 230) est prévue pour être située dans le renfoncement (120),
la partie de bride (140, 220) n'est pas prévue aux deux extrémités de la plaque d'extrémité (42) dans la deuxième direction (X), la partie de surface plate (150, 230) s'étend jusqu'à une pointe dans la troisième direction (Z) de l'élément en forme de plaque (100, 200), et
la partie de surface plane (150, 230), la partie de transition (160, 240) et la partie de bride (140, 220) sont prévues pour être disposées côte à côte dans la deuxième direction (X).

2. Le module de batterie selon la revendication 1, dans lequel la plaque d'extrémité (42) comprend une partie de fixation (44A) qui est prévue dans la partie de surface plate (150, 230) adjacente à la partie de transition (160, 240) et qui est fixée à l'élément de retenue (43).

3. Le module de batterie selon la revendication 2, dans lequel la partie de fixation (44A) est prévue pour être située à chacune des deux parties d'extrémité de la plaque d'extrémité (42) dans la deuxième direction.

4. Le module de batterie selon l'une des revendications 1 à 3, comprenant en outre un boîtier (31) qui accueille la pluralité de cellules de batterie (11), qui supporte la pluralité de cellules de batterie (11) dans au moins la première direction, et qui forme une unité (21) comprenant la pluralité de cellules de batterie (11).

5. Le module de batterie selon la revendication 4, dans lequel l'élément en forme de plaque (100) a la protubérance (110) et le renfoncement (120) qui s'étendent chacun dans la deuxième direction et sont disposés côte à côte dans la troisième direction, et la protubérance (110) est en butée avec le boîtier dans la première direction.

6. Le module de batterie selon la revendication 4 ou 5, dans lequel l'unité (21) comprend deux cellules de batterie (11) ou plus, et chacune des deux cellules de batterie (11) ou plus a une densité de sortie de 8000 W/L ou plus.
